# DEMANDE DE BREVET EUROPEEN

(11) **EP 1 657 262 A2**
(43) Date de publication de la demande: **17.05.2006**
(21) Numéro de dépôt: 05300916.3
(22) Date de dépôt: 14.11.2005
(51) Int. Cl.: C08F 22/20, C08F 22/14, C08F 2/48

(54) **Composition photoréticulable pour matériau de fibre optique plastique a saut d'indice**

(30) Priorité: 15.11.2004 FR 0452627
(71) Demandeur: Nexans, 75008 Paris (FR)
(72) Inventeur: Alric, Jérôme, 38080, L'ISLE D'ABEAU (FR); Tavard, Elisabeth, 69009, LYON (FR); Fournier, Jérôme, 69006, LYON (FR)
(74) Mandataire: Feray, Valérie

(57) **Abrégé**

La présente invention concerne une composition photoréticulable destinée à la fabrication d'un matériau de fibre optique plastique à saut d'indice.

L'invention est remarquable en ce que la composition photoréticulable comporte un dérivé acrylé d'un composé à base d'un bisphénol, ainsi qu'un photoamorceur.

## Description

La présente invention concerne une composition photoréticulable qui est destinée à la fabrication d'un matériau utilisable dans une fibre optique plastique à saut d'indice, en tant que matériau de coeur et/ou matériau de gaine.

L'invention concerne également un procédé de fabrication d'un tel matériau, et plus largement une fibre optique plastique à saut d'indice réalisée à partir d'au moins un matériau issu d'une telle composition photoréticulable.

L'invention trouve une application particulièrement avantageuse, mais non exclusive, dans le domaine des télécommunications par voie optique.

Aujourd'hui, les fibres thermoplastiques à base de PMMA constituent les fibres optiques plastiques à saut d'indice les plus largement utilisées. Ceci s'explique essentiellement par le fait que leur procédé de fabrication, bien que complexe, est actuellement le seul a être parfaitement maîtrisé au point de vue industriel.

Si elles offrent des propriétés optiques tout à fait satisfaisantes, et notamment un niveau d'atténuation optique inférieur à 1000dB/km, les fibres thermoplastiques à base de PMMA présentent toutefois l'inconvénient de disposer d'une tenue en température relativement faible, en tout cas suffisamment faible pour les rendre quasiment inutilisables dès lors que la température d'utilisation dépasse les 100°C. Il en résulte que dans la pratique, l'emploi de ce type de fibres optiques plastiques est limité à des environnements thermiques peu contraignants, c'est-à-dire dans lesquels la température d'utilisation est généralement inférieure à 80°C.

Bien évidemment, cette limitation restreint considérablement les champs d'application des fibres thermoplastiques à base de PMMA, et donc plus globalement leur intérêt. Des domaines pourtant demandeurs de moyens de communication rapides, comme l'automobile ou l'aéronautique, leur sont par exemple difficilement accessibles étant donné que des endroits tels que les compartiments moteurs leur sont quasiment interdits.

Aussi le problème technique à résoudre, par l'objet de la présente invention, est de proposer une composition photoréticulable destinée à la fabrication d'un matériau de fibre optique plastique à saut d'indice, composition qui permettrait d'éviter les problèmes de l'état de la technique en présentant une tenue en température sensiblement améliorée une fois réticulée, tout en offrant des performances optiques compatibles avec des transmissions de signaux lumineux sur de courtes distances, typiquement sur une dizaine de mètres.

La solution au problème technique posé consiste, selon la présente invention, en ce que la composition photoréticulable comporte un dérivé acrylé d'un composé à base d'un bisphénol, ainsi qu'un photoamorceur.

Il est à noter que le fait que la composition photoréticulable soit destinée à la fabrication d'un matériau pour fibre optique plastique à saut d'indice, signifie qu'elle peut être utilisée pour réaliser indifféremment un matériau de coeur ou un matériau de gaine. Cela sous-entend par conséquent qu'une fibre optique plastique conforme à l'invention pourra avoir au choix, soit uniquement son coeur fabriqué à partir d'une composition photoréticulable telle que précédemment décrite, soit seulement sa gaine issue d'une telle composition, soit son coeur et sa gaine tous deux réalisés en utilisant ladite composition.

L'invention telle qu'ainsi définie présente l'avantage de permettre l'obtention d'un matériau réticulé présentant, d'une part, de bonnes propriétés thermomécaniques jusqu'à des températures avoisinant les 120°C, et d'autre part, un niveau d'atténuation optique inférieur à 1000dB/km avec une limite basse pouvant atteindre les 500dB/km.

Un autre avantage d'une composition photoréticulable conforme à l'invention réside dans son prix de revient extrêmement bas, qui influe favorablement et de manière directe celui de la fibre optique plastique à saut d'indice. A l'heure d'aujourd'hui, une diminution d'un facteur 8 du prix au kilomètre apparaît tout à fait envisageable.

Selon une particularité de l'invention, le dérivé acrylé est choisi parmi un acrylate, un méthacrylate et un α-fluoroacrylate. A cet égard, il est connu que les groupements fonctionnels acrylates présentent en polymérisation radicalaire une réactivé supérieure à celles des groupements méthacrylates. Aussi, le dérivé acrylé sera de préférence de type acrylate, indépendamment bien sûr de la nature exacte du composé à base de bisphénol considéré.

Selon une autre particularité de l'invention, le composé dont est issu le dérivé acrylé est un dérivé alcoxylé d'un bisphénol.

De manière particulièrement avantageuse, le dérivé alcoxylé est choisi parmi un dérivé éthoxylé d'un bisphénol et un dérivé propoxylé d'un bisphénol.

De préférence, le bisphénol qui est à la base du composé acrylé, est choisi parmi le bisphénol A, le bisphénol AF, le bisphénol M, le bisphénol P, le bisphénol AP et le bisphénol S.

Selon une autre particularité de l'invention, la composition photoréticulable peut comporter en outre un agent de réticulation à même d'optimiser la réaction de polymérisation. Cet agent de réticulation peut à priori être de toute nature connue.

De manière particulièrement avantageuse, la teneur en agent de réticulation au sein de la composition photoréticulable est comprise entre 0,5 et 5% en poids.

Selon une autre particularité de l'invention, la viscosité du dérivé acrylé est comprise entre 0,5 et 20 Pa.s, et de préférence entre 1 et 5 Pa.s.

L'invention concerne également un procédé de fabrication d'un matériau destiné à la réalisation d'une fibre optique plastique à saut d'indice. Il est entendu qu'il peut s'agir aussi bien d'un matériau de coeur, que d'un matériau de gaine. Quoi qu'il en soit, un tel procédé est remarquable en ce qu'il comporte les étapes consistant à:
- mélanger un dérivé acrylé d'un composé à base d'un bisphénol et un photoamorceur pour obtenir une composition photoréticulable,
- mettre en forme la composition résultant du mélange,
- réticuler la composition préalablement mise en forme par rayonnement ultraviolet.

Il est à noter que le dérivé acrylé d'un composé à base d'un bisphénol est à considérer comme un oligomère. Une fois cet oligomère mélangé avec son photoamorceur, une réaction de polymérisation va débuter de sorte que la composition va prendre plus ou moins rapidement une consistance suffisante pour lui permettre d'être mise en forme dans la seconde étape du procédé. La réticulation qui est opérée ensuite permet de figer le matériau dans sa forme finale d'utilisation.

Selon une particularité de ce procédé, une étape de filtration du dérivé acrylé peut être mise en oeuvre préalablement à l'étape de mélange.

Selon une autre particularité du procédé, un agent de réticulation peut être ajouté à la composition pendant l'étape de mélange.

Selon une autre particularité de l'invention, l'étape de réticulation par rayonnement ultraviolet est mise en oeuvre de manière continue.

Selon une autre particularité de l'invention, le procédé peut en outre comporter une étape de recuit qui est mise en oeuvre postérieurement à l'étape de réticulation.

Bien entendu, l'invention est en outre relative à toute fibre optique plastique à saut d'indice comportant un coeur constitué d'un matériau dit de coeur et une gaine constituée d'un matériau dit de gaine, dans laquelle l'un au moins des matériaux respectivement de coeur et de gaine est réalisé à partir d'une composition photoréticulable selon l'une quelconque des revendications précédentes.

D'autres caractéristiques et avantages de la présente invention apparaîtront au cours de la description qui va suivre. Cette description, donnée à titre d'exemple non limitatif, est destinée à mieux faire comprendre en quoi consiste l'invention et comment elle peut être réalisée. Elle est donnée en référence aux dessins annexés dans lesquels:
La figure 1 illustre schématiquement un dispositif permettant la fabrication de fibres optiques plastiques à saut d'indice conformes à l'invention.
La figure 2 est un schéma montrant l'influence de quantités croissantes d'agent de réticulation, sur les propriétés thermomécaniques de matériaux conformes à l'invention.
La figure 3 représente des spectres de pertes optiques qui mettent en évidence l'effet d'une filtration des compositions conformes à l'invention, sur les performances optiques des fibres correspondantes.
La figure 4 concerne des spectres d'atténuation qui illustrent les performances optiques de fibres dotées de matériaux de coeur de compositions différentes.
La figure 5 est relative à des spectres d'atténuation qui mettent en lumière les performances optiques d'une fibre ayant subie des vieillissements thermiques à 100°C pendant des durées différentes.
La figure 6 est un schéma similaire à celui de la figure 5, mais pour des vieillissements thermiques réalisés à 120°C.

Sept fibres optiques plastiques à saut d'indice sont préparées afin de déterminer les propriétés thermomécaniques et les performances optiques de matériaux de coeur réalisés à partir de compositions conformes à l'invention. Un autre objectif est d'effectuer une comparaison avec les propriétés mécaniques d'une fibre optique plastique classique du commerce, en l'occurrence une fibre à base de PMMA.

Il faut remarquer que les sept fibres optiques plastiques selon l'invention diffèrent les unes des autres uniquement au niveau de la composition de leurs matériaux de coeur respectifs. Cela implique par conséquent que le matériau de gaine est quant à lui commun à toutes les fibres, tout comme leur procédé de fabrication.

A cet égard, il est à noter que la fabrication des fibres optiques plastiques en question consiste essentiellement à préparer séparément les différentes compositions des matériaux de coeur et de gaine, puis à les combiner ensemble lors de la mise en oeuvre d'un procédé de fabrication en continu mettant en jeu une réticulation par rayonnement ultraviolet.

### Préparation des matériaux de coeur

Sept compositions pour des matériaux de coeur sont ainsi préparés à partir de trois constituants distincts utilisables dans des proportions variables, à savoir un oligomère, un photoamorceur et le cas échéant un agent de réticulation. Il est en effet entendu que les présences simultanées de l'oligomère et du photoamorceur sont indispensables conformément à l'objet de la présente invention.

Le tableau 1 détaille les compositions respectives des différents matériaux de coeur utilisés pour fabriquer les sept fibres optiques plastiques.

**tableau 1**

| Fibre | Oligomère (% en poids) | Agent de réticulation (% en poids) | Photo amorceur (% en poids) | Seuil de filtration (µm) |
|---|---|---|---|---|
| 1 | 100 | 0 | 1 | 0.2 |
| 2 | 100 | 0 | 0.2 | 10 |
| 3 | 100 | 0 | 0.2 | 0.2 |
| 4 | 97.5 | 2.5 | 0.2 | 0.2 |
| 5 | 95 | 5 | 0.2 | 0.2 |
| 6 | 92.5 | 7.5 | 0.2 | 0.2 |
| 7 | 90 | 10 | 0.2 | 0.2 |

L'oligomère de coeur est bien évidemment conforme à l'objet de la présente invention. Dans cet exemple de réalisation, il s'agit du Bisphenol A éthoxylé (3) diacrylé, commercialisé sous la marque SR349 par la société Cray Valley. Sa formule chimique développée est la suivante:

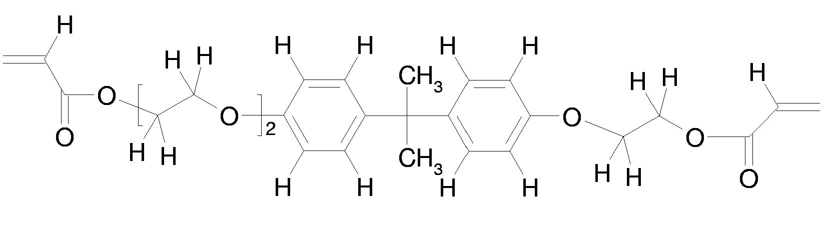

L'agent de réticulation est du triacrylate de tris (2-hydroxyéthyl) isocyanurate, commercialisé sous le nom SR368 par la société Cray Valley.

Le photoamorceur est de l'oxyde de bisphenyl (2,4,6-trimethyl benzoyl) phosphine, commercialisé sous la marque IRGACURE 819 par la société CIBA.

### Préparation des matériaux de gaine

Comme cela a été dit précédemment, le matériau de gaine est commun aux sept fibres optiques plastiques conformes à l'invention, tant au niveau de la composition, que des proportions des différents constituants. Il consiste en un mélange de 80% en poids d'un oligomère, de 10% en poids d'un diluant réactif destiné à baisser la viscosité et à ajuster l'indice du matériau de gaine, et de 10% en poids d'un durcisseur qui comme son nom l'indique est destiné à durcir ledit matériau de gaine.

Dans cet exemple de réalisation, l'oligomère de gaine est un oligomère aliphatique epoxy triacrylé, commercialisé sous le nom CN133 par la société Cray Valley.

Le diluant réactif est de l'acrylate de trifluoroéthyle, commercialisé sous la marque VISCOAT 3F™ par le société KOWA.

Le durcisseur est de l'α-fluoroacrylate d'hexafluoroisopropyle, commercialisé sous la marque FAHFIP par le société P&M.

### Fabrication des fibres optiques plastiques à saut d'indice

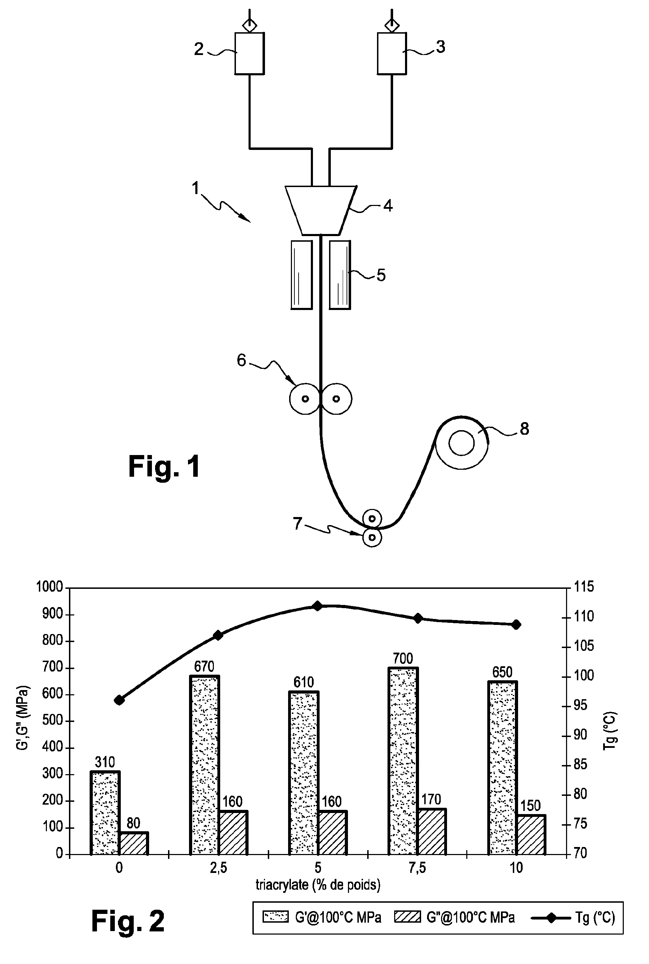

La figure 1 représente schématiquement le dispositif 1 utilisé pour la réalisation de chaque fibre optique plastique. Ainsi donc, les compositions de coeur et de gaines précédemment préparées sont filtrées puis placées respectivement dans deux réservoirs d'approvisionnement 2, 3 qui sont régulés thermiquement. Au moyen d'azote sous pression, les résines sont ensuite envoyées individuellement au sein d'un mélangeur 4 qui est à même de les distribuer suivant un profil de type saut d'indice. L'écoulement ainsi généré passe alors à travers une filière, non représentée pour des raisons de clarté, qui est chargée d'en réduire le diamètre à une valeur déterminée, avant que ne commence le traitement par rayonnement ultraviolet. L'opération de réticulation s'effectue en effet directement en sortie de la filière. Concrètement, l'écoulement est dirigé à travers un caisson 5 qui renferme une lampe au mercure à même de l'irradier en continu, au fur et à mesure de son défilement. Une fois les matériaux de coeur et de gaine réticulés, la fibre optique plastique est véritablement réalisée. Elle peut alors être collectée au moyen d'un système à galets mobiles 6, 7, en vue d'être enroulée autour d'une bobine 8.

L'avantage du dispositif de fabrication 1 précédemment décrit est de permettre la mise en oeuvre d'un procédé entièrement continu, y compris en ce qui concerne l'étape de réticulation. Il est ainsi possible d'atteindre des vitesses de fabrication dépassant les 100 m/min, ce qui est de loin très supérieur à ce que l'on obtient généralement avec un procédé d'extrusion classique tel que celui habituellement mis en oeuvre pour la fabrication de fibres optiques plastiques reposant sur l'étirage de préformes à base de PMMA.

Un autre avantage réside dans la capacité à pouvoir ajuster le rapport entre le volume du matériau de coeur et celui du matériau de gaine, simplement en faisant varier le diamètre de la filière et/ou la pression d'azote et/ou la température des réservoirs d'approvisionnement 2, 3.

Quoi qu'il en soit, au final, on obtient avantageusement une fibre optique plastique à saut d'indice présentant une interface d'une grande finesse entre le coeur et la gaine, ainsi qu'une concentricité optimale entre ces deux éléments constitutifs.

Pour en revenir plus concrètement à l'exemple choisi pour déterminer et comparer les propriétés thermomécaniques et les performances optiques de matériaux conformes à l'invention, il est à noter que les fibres optiques plastiques fabriquées présentent toutes des diamètres extérieurs compris entre 600µm et 950µm, les diamètres des différents coeurs étant quant à eux compris entre 500µm et 750µm.

### Etude des propriétés thermomécaniques des matériaux de coeur

Les différents matériaux de coeur ont été préparés en faisant varier les teneurs en agent de réticulation et en photoamorceur, mais aussi en modifiant le seuil de filtration des compositions correspondantes. Il convient dès lors d'examiner l'influence de chacune de ces variables sur les propriétés thermomécaniques des matériaux de coeur.

C'est pourquoi dans un premier temps, on a étudié la dépendance entre, d'une part, la quantité d'agent de réticulation présente dans chaque composition, et d'autre part, le module de stockage G', le module de perte G", et la température de transition vitreuse Tg du matériau réticulé correspondant. Les matériaux de coeur concernés sont ceux des fibres 3 à 7 (tableau 1). L'ensemble des résultats est schématisé graphiquement à la figure 2.

La température de transition vitreuse du triacrylate de tris(2-hydroxyéthyl) isocyanurate étant de 272°C, une faible quantité d'agent de réticulation dans une composition conduit à accroître la Tg du matériau réticulé correspondant, ceci en raison d'une augmentation de la densité de réticulation.

Ainsi qu'on peut le voir sur la figure 2, alors que la température de transition vitreuse du matériau à base d'oligomère pure a été mesurée à 96°C, le matériau réticulé contenant 5% en poids d'agent de réticulation a vu sa Tg rehaussée à 112°C. Parallèlement, on observe une certaine préservation du module de stockage et du module de perte, ceci de la température ambiante à 100°C, ce qui apparaît logique vu que la température de transition vitreuse n'a pas été dépassée.

On remarque par ailleurs que la température de transition vitreuse n'augmente pas avec des quantités plus importantes d'agent de réticulation. Au contraire, elle commence à diminuer dès lors que la proportion dépasse les 5% en poids. Cela peut s'expliquer par le fait que les groupements acrylates de l'agent de réticulation sont difficilement accessibles en raison de la structure chimique très dense de ce dernier, de sorte qu'ils ne peuvent pas tous réagir en même temps quand la concentration dudit agent de réticulation atteint un niveau élevé dans la composition photoréticulable. L'agent de réticulation joue alors un rôle opposé, celui d'un plastifiant.

Les propriétés mécaniques des fibres optiques plastiques 1, 3 et 5 ont été reportées dans le tableau 2, et comparées avec celles d'une fibre optique plastique classique à base de PMMA. En l'occurrence, il s'agit d'une fibre commercialisée sous la dénomination ESKA10 par la société MITSUBISHI RAYON Co. Cette fibre se caractérise notamment par un diamètre externe de 250µm.

**tableau 2**

| Fibre | Contrainte au seuil de déformation plastique(%) | Module de Young (MPa) | Allongement à la rupture (%) | Contrainte à la rupture (MPa) |
|---|---|---|---|---|
| 1 | 5.5 ± 0.1 | 1600 ± 100 | 11 ± 2 | 54 ± 4 |
| 3 | 5.5 ± 0.1 | 1450 ± 90 | 10 ± 2 | 45 ± 3 |
| 5 | 5.5 ± 0.1 | 1680 ± 50 | 10 ± 2 | 49 ± 2 |
| PMMA | 5.7 ± 0.2 | 3410 ± 60 | 167 ± 7 | 193 ± 9 |

En raison de leur structures réticulées, les fibres optiques plastiques conformes à l'invention présentent des contraintes à la rupture plus basses que celle de la fibre optique plastique en PMMA, c'est-à-dire à base d'un matériau thermoplastique.

Cependant, les contraintes au seuil de déformation plastique sont comparables, ce qui rend les fibres optiques plastiques à base de matériaux réticulés aussi aisées à manipuler que la fibre optique plastique en PMMA. D'ailleurs, malgré des modules de Young plus bas, les fibres optiques plastiques à base de matériaux réticulés sont suffisamment résistantes du point de vue mécanique pour résister à une étape de rembobinage sans casser.

On remarque par ailleurs la teneur en photoamorceur ou la présence de l'agent de réticulation ne modifie pas fondamentalement les propriétés mécaniques, même si le module de Young est légèrement plus élevé quand ledit agent de réticulation est utilisé dans la composition de matériau de coeur (fibre 5).

Les propriétés mécaniques de la fibre 1 comparées à celles de la fibre 3 sont sensiblement du même ordre, ce qui signifie que la photoréticulation a la même efficacité sur le taux de conversion du matériau, et ainsi sur la densité de réticulation du matériau, même si la proportion de photoamorceur diffère d'un facteur 5.

A ce stade de l'analyse, il apparaît que l'utilisation combinée d'un oligomère pur et d'une faible proportion de photoamorceur est à même de produire une fibre optique plastique dont les propriétés mécaniques sont d'un niveau satisfaisant, notamment pour des applications dans le domaine automobile.

### Influence des paramètres clés du procédé de fabrication sur les propriétés optiques des fibres optiques plastiques à saut d'indice

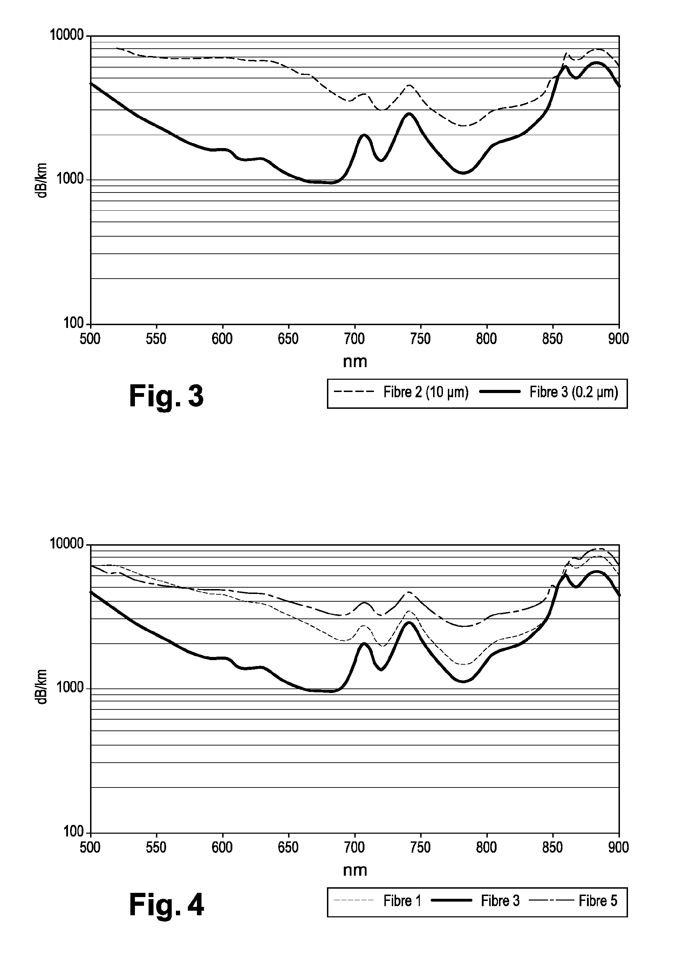

L'impact du seuil de filtration sur le niveau d'atténuation global des fibres optiques plastiques a tout d'abord été étudié. A cet égard, la figure 3 permet d'effectuer une comparaison entre les spectres de pertes optiques des fibres 2 et 3.

On observe que la fibre 2, dont le matériau de coeur a été réalisé à partir d'une composition préalablement filtrée avec un filtre de 10µm, présente un niveau d'atténuation plus élevé que celui de la fibre 3, dont le matériau de coeur est issu d'une composition préalablement filtrée avec un filtre de 0,2µm. Les pertes par diffusion plus importantes dans la région 500-700nm dénotent la présence de particules de poussière qui sont efficacement enlevées de la composition de coeur dès lors que la filtration est réalisée plus finement.

Ainsi donc, il apparaît clairement que la pollution par des particules de poussière de taille supérieure λ/10, où λ est la longueur d'onde du signal lumineux, a un effet tout à fait préjudiciable sur le niveau d'atténuation global ; cet effet se manifestant par un accroissement des pertes par diffusion.

L'effet de l'homogénéité des matériaux de coeur sur les propriétés optiques des fibres à saut d'indice, a ensuite été examiné. La figure 4 présente dans ce but les spectres de pertes optiques de trois fibres plastiques préparées en utilisant des compositions de matériaux de coeur différentes.

Les matériaux de coeur de la fibre 1 et de la fibre 3 sont tous deux réalisés à partir d'oligomère pur, en ce sens qu'ils ne contiennent pas d'agent de réticulation. Ils se distinguent cependant l'un de l'autre par le fait que la teneur en photoamorceur est de seulement 0,2% en poids dans le cas du matériau de coeur de la fibre 3, alors qu'elle est de 1% en poids dans celui de la fibre 1. les matériaux de coeur des fibres 3 et 5 diffèrent quant à eux uniquement par la présence d'agent de réticulation dans le matériau de coeur de la fibre 5, la teneur en photoamorceur étant en effet la même dans les deux cas.

La comparaison des spectres de la figure 4 met tout d'abord clairement en évidence que le photoamorceur agit comme un contaminant qui altère les performances optiques. Le niveau d'atténuation global de la fibre 1 est en effet considérablement plus élevé que celui de la fibre 3. Cela signifie qu'en diminuant d'un facteur 5 la teneur en photoamorceur, la valeur d'atténuation minimale est réduite de plus de 1000dB/km dans la région 650-700nm.

En considérant par ailleurs que les propriétés mécaniques d'une fibre optique plastique ne sont pas grandement affectées par une faible teneur en photoamorceur (voir tableau 2), on peut conclure que l'utilisation d'une quantité minimale de photoamorceur permet avantageusement d'obtenir un matériau de coeur avec des propriétés optiques améliorées.

La comparaison des spectres de la figure 4 fait également apparaître que la présence d'agent de réticulation au sein de la composition du matériau de coeur (fibre 5) génère une diminution significative des performances optiques de la fibre optique plastique correspondante.

Ce résultat peut s'expliquer par une plus grande hétérogénéité structurelle du matériau, qui résulte du fait que la réticulation a été réalisée dans le cas de la fibre 5 sur un véritable mélange composé de quantités non négligeables d'oligomère et d'agent réticulant. Il n'est par conséquent pas illogique que la multiplication des imperfections au sein du matériau de coeur entraîne de plus importantes pertes optiques par diffusion.

Ainsi donc, et malgré le fait qu'elle engendre un relèvement d'une vingtaine de degrés de la température de transition vitreuse du matériau, l'utilisation de l'agent de réticulation ne constitue pas un choix pertinent pour améliorer les propriétés thermomécaniques d'une fibre optique plastique à saut d'indice.

### Etude de la tenue en température

La tenue en température de la fibre 3 a été étudiée en suivant ses performances optiques et ses propriétés mécaniques avant et après chauffage à des températures distinctes de 100 et 120°C, dans chaque cas pendant des durées déterminées de 100 et 300 heures.

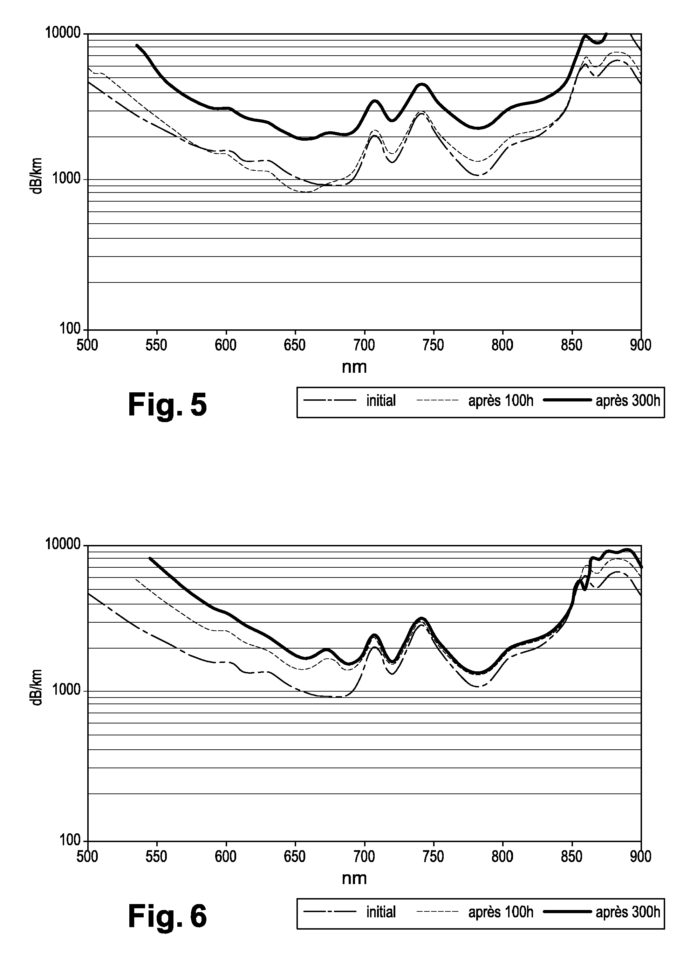

Plus particulièrement, la figure 5 montre en superposition les spectres de pertes optiques de la fibre 3, respectivement avant chauffage, après chauffage à 100°C pendant 100 heures, et après chauffage à 100°C pendant 300 heures.

On remarque principalement que le vieillissement thermique pendant une durée de 100 heures n'affecte pas beaucoup les performances optiques globales de la fibre. Les pertes dans la région 600-700nm s'avèrent même légèrement réduites après chauffage. Cela peut s'expliquer aussi bien par l'effet post-traitement thermique généré qui a pu agir sur les groupements acryliques résiduels, que par la relaxation du matériau qui a pu être engendrée grâce au fait que le traitement thermique en question a été mené au dessus de la température de transition vitreuse.

Quoi qu'il en soit, une telle observation confirme le bénéfice qu'un post-traitement thermique peut apporter en complément de la photoréticulation initiale, notamment pour supprimer les contraintes structurelles internes des matériaux et pour améliorer les performances optiques de la fibre optique plastique correspondante.

Les propriétés mécaniques de la fibre 3, avant et après le vieillissement thermique, sont quant à elles reportées dans le tableau 3.

**tableau 3**

| Température (°C) / temps (heures) | Contrainte au seuil de déformation plastique (%) | Module de Young (MPa) | Allongement à la rupture (%) | Contrainte à la rupture (MPa) |
|---|---|---|---|---|
| ambiante/t₀ | 5.5 ± 0.1 | 1540 ± 90 | 10 ± 2 | 45 ± 3 |
| 100°C/100h | 4.9 ± 0.1 | 2040 ± 200 | 7 ± 1 | 57 ± 3 |
| 100°C/300h | 5.0 ± 0.1 | 2110 ± 120 | 5.8 ± 0.6 | 62 ± 2 |
| 120°C/100h | 5.3 ± 0.1 | 1800 ± 70 | 8 ± 2 | 52 ± 1 |
| 120°C/300h | 4.9 ± 0.2 | 2350 ± 100 | 6.4 ± 0.7 | 65 ± 3 |

Les valeurs plus élevées des modules de Young et des contraintes à la rupture confirment l'effet du post-traitement thermique sur les groupements acryliques résiduels.

On peut noter par ailleurs que les propriétés mécaniques de la fibre 3 n'ont pas été affectées par le vieillissement thermique, même lorsque la fibre optique plastique a été traitée à 120°C, c'est-à-dire près de 30°C au dessus de la température de transition vitreuse du matériau de coeur.

Dès lors que le vieillissement thermique à 100°C est mené pendant 300 heures, les résultats sont par contre tout autre en ce qui concerne les performances optiques. On observe en effet un accroissement très significatif des pertes optiques de la fibre, puisqu'il est de l'ordre de 1000dB/km.

L'explication vient à priori du fait que les pertes par dispersion, qui sont dues aux imperfections structurelles du matériau, sont probablement augmentées après chauffage. Le matériau étant traité au-dessus de sa température de transition vitreuse pendant une longue durée, il n'est pas illogique que sa structure puisse être endommagée localement à cette occasion.

Des observations similaires ont été faites lorsque la fibre 3 a été traitée à une température de 120°C. Le vieillissement thermique conduit en effet là aussi à une augmentation des pertes optiques, sans affecter pour autant les propriétés mécaniques de la fibre. L'accroissement de l'atténuation optique globale, qui n'est pas dépendante de la longueur d'onde, dénote que le vieillissement thermique affecte les propriétés de transmission des signaux lumineux.

La figure 11 présente en superposition les spectres de pertes optiques de la fibre 3, respectivement avant chauffage, après chauffage à 120°C pendant 100 heures, et après chauffage à 120°C pendant 300 heures.

## Revendications

1. Composition photoréticulable destinée à la fabrication d'un matériau de fibre optique plastique à saut d'indice, **caractérisée en ce que** ladite composition photoréticulable comporte un dérivé acrylé d'un composé à base d'un bisphénol, ainsi qu'un photoamorceur.

2. Composition photoréticulable selon la revendication 1, **caractérisée en ce que** le dérivé acrylé est choisi parmi un acrylate, un méthacrylate et un α-fluoroacrylate.

3. Composition photoréticulable selon l'une des revendications 1 ou 2, **caractérisée en ce que** le composé dont est issu le dérivé acrylé est un dérivé alcoxylé d'un bisphénol.

4. Composition photoréticulable selon la revendication 3, **caractérisée en ce que** le dérivé alcoxylé est choisi parmi un dérivé éthoxylé d'un bisphénol et un dérivé propoxylé d'un bisphénol.

5. Composition photoréticulable selon l'une quelconque des revendications 1 à 4, **caractérisée en ce que** le bisphénol à la base du composé acrylé, est choisi parmi le bisphénol A, le bisphénol AF, le bisphénol M, le bisphénol P, le bisphénol AP et le bisphénol S.

6. Composition photoréticulable selon l'une quelconque des revendications 1 à 5, **caractérisée en ce qu'**elle comporte en outre un agent de réticulation.

7. Composition photoréticulable selon la revendication 6, **caractérisée en ce que** la teneur en agent de réticulation est comprise entre 0,5 et 5% en poids.

8. Composition photoréticulable selon l'une quelconque des revendications 1 à 7, **caractérisée en ce que** la viscosité du dérivé acrylé est comprise entre 0,5 et 20 Pa.s, et de préférence entre 1 et 5 Pa.s.

9. Procédé de fabrication d'un matériau de fibre optique plastique à saut d'indice, **caractérisé en ce qu'**il comporte les étapes consistant à:
- mélanger un dérivé acrylé d'un composé à base d'un bisphénol et un photoamorceur pour obtenir une composition photoréticulable,
- mettre en forme la composition résultant du mélange,
- réticuler le composition préalablement mise en forme par rayonnement ultraviolet.

10. Procédé de fabrication selon la revendication 9, **caractérisé en ce qu'**il comporte une étape de filtration du dérivé acrylé, préalablement à l'étape de mélange.

11. Procédé de fabrication selon l'une des revendications 9 ou 10, **caractérisé en ce qu'**un agent de réticulation est ajouté à la composition pendant l'étape de mélange.

12. Procédé de fabrication selon l'une quelconque des revendications 9 à 11, **caractérisé en ce que** l'étape de réticulation est mise en oeuvre de manière continue.

13. Procédé de fabrication selon l'une quelconque des revendications 9 à 12, **caractérisé en ce qu'**il comporte une étape de recuit, postérieurement à l'étape de réticulation.

14. Fibre optique plastique à saut d'indice comportant un coeur constitué d'un matériau dit de coeur et une gaine constituée d'un matériau dit de gaine, **caractérisée en ce que** l'un au moins des matériaux respectivement de coeur et de gaine est réalisé à partir d'une composition photoréticulable selon l'une quelconque des revendications 1 à 8.
